# EUROPEAN PATENT APPLICATION

(11) **EP 3 823 336 A1**
(43) Date of publication of application: **19.05.2021**
(21) Application number: 18925760.3
(22) Date of filing: 13.07.2018
(51) Int. Cl.: H04W 16/28, H04W 72/04

(54) **USER EQUIPMENT AND BASE STATION**

(71) Applicant: NTT DoCoMo, Inc., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2018/026608
(87) International publication number: WO 2020/012661

(57) **Abstract**

A user terminal according to an aspect of the present disclosure includes: a transmitting section configured to transmit a measurement result of a reference signal measured by applying a downlink spatial domain reception filter; and a control section configured to assume that a downlink spatial domain reception filter used for reception of a PDCCH (Physical Downlink Control Channel) is same as a downlink spatial domain reception filter corresponding to the transmitted latest measurement result when low latency beam selection is configured by higher layer signaling. According to one aspect of the present disclosure, the TCI state or beam of a channel can be switched at high speed.

## Description

### Technical Field

The present disclosure relates to user equipment and a base station in next-generation mobile communication systems.

### Background Art

In the UMTS (Universal Mobile Telecommunications System) network, the specifications of long-term evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE (for example, FRA (Future Radio Access), 5G (5th generation mobile communication system), 5G+ (plus), NR (New Radio), NX (New radio access), FX (Future generation radio access), LTE Rel. 14 or 15 or later versions) are also under study.

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (hereinafter, also simply referred to as NR), it is considered to control channel transmission/reception processing based on a transmission configuration indicator (TCI) state.

However, the TCI state control method studied so far for Rel-15 NR requires a relatively long time to change the TCI state and requires a communication overhead. Therefore, in cases where the TCI state needs to be changed frequently, the communication throughput can be reduced.

Therefore, an object of the present disclosure is to provide user equipment and a base station capable of switching the TCI state or beam of a channel at high speed.

### Solution to Problem

A user terminal according to an aspect of the present disclosure includes: a transmitting section configured to transmit a measurement result of a reference signal measured by applying a downlink spatial domain reception filter; and a control section configured to assume that a downlink spatial domain reception filter used for reception of a PDCCH (Physical Downlink Control Channel) is same as a downlink spatial domain reception filter corresponding to the transmitted latest measurement result when low latency beam selection is configured by higher layer signaling.

### Advantageous Effects of Invention

According to one aspect of the present disclosure, the TCI state or beam of a channel can be switched at high speed.

### Brief Description of Drawings

Fig. 1 is a diagram showing an example of beam management for PDCCH in Rel-15 NR.
Fig. 2 is a diagram showing an example of low latency beam selection.
Fig. 3 is a diagram showing an example of beam management for PDCCH when low latency beam selection is configured.
Fig. 4 is a diagram showing an example of a PUCCH or PUSCH resource for reporting CSI measurement results.
Fig. 5 is a diagram showing an example of beam management for PDSCH when low latency beam selection is configured.
Fig. 6 is a diagram showing an example of beam management for PUCCH when low latency beam selection is configured.
Fig. 7 is a diagram showing another example of beam management for PUCCH when low latency beam selection is configured.
Fig. 8 is a diagram showing an example of an assumption of a base station transmission beam of a PDCCH based on T_{offset}.
Fig. 9 is a diagram showing another example of an assumption of a base station transmission beam of a PDCCH based on T_{offset}.
Fig. 10 is a diagram showing yet another example of an assumption of a base station transmission beam of a PDCCH based on T_{offset}.
Fig. 11 is a diagram to show an example of a schematic structure of a radio communication system according to one embodiment.
Fig. 12 is a diagram showing an example of an overall configuration of a base station according to one embodiment.
Fig. 13 is a diagram showing an example of a functional configuration of the base station according to one embodiment.
Fig. 14 is a diagram showing an example of an overall configuration of user equipment according to one embodiment.
Fig. 15 is a diagram showing an example of a functional configuration of the user equipment according to one embodiment.
Fig. 16 is a diagram showing an example of a hardware structure of the base station and the user equipment according to one embodiment.

### Description of Embodiments

### (CORESET)

In NR, in order to transmit a physical layer control signal (for example, downlink control information (DCI)) from a base station to a user terminal (UE: User Equipment), a control resource set (CORESET: COntrol REsource SET) is used.

The CORESET is an allocation candidate area of a control channel (for example, PDCCH (Physical Downlink Control Channel)). The CORESET may be configured to include predetermined frequency domain resources and time domain resources (for example, 1 or 2 OFDM symbols, and the like).

The UE may receive the CORESET configuration information (which may be referred to as coreset-Config) from the base station. The UE can detect the physical layer control signal by monitoring the CORESET configured in its own equipment.

The CORESET configuration may be notified by higher layer signaling, for example, and may be represented by a predetermined RRC information element (may be referred to as "ControlResourceSet") .

Here, the higher layer signaling may be, for example, any of RRC (Radio Resource Control) signaling, MAC (Medium Access Control) signaling, broadcast information and so on, or a combination thereof.

For the MAC signaling, for example, a MAC control element (MAC CE), a MAC protocol data section (PDU), or the like may be used. The broadcast information may be, for example, a master information block (MIB), a system information block (SIB), remaining minimum system information (RMSI), or the like.

A predetermined number (for example, 3 or less) of CORESETs may be configured for each bandwidth part (BWP) configured in the UE in a serving cell.

Here, the BWP is a partial band configured in a carrier (also referred to as a cell, a serving cell, a component carrier (CC)), and is also called a partial band. The BWP may include a BWP (UL BWP, uplink BWP) for an uplink (UL) and a BWP (DL BWP, downlink BWP) for a downlink (DL). Each BWP provided with the predetermined number of CORESETs may be a DL BWP.

The CORESET configuration may mainly include information of PDCCH resource-related configuration and RS-related configuration. The UE may be provided with the following parameters by higher layer signaling (CORESET configuration) for CORESET#p (for example, 0 ≤ p < 3) configured in each DL BWP. That is, the following parameters may be notified to (configured in) the UE for each CORESET:
- CORESET-ID (Identifier),
- Scramble ID of a demodulation reference signal (DMRS) for a PDCCH,
- CORESET time length (e.g., time duration, CORESET-time-duration), indicated by the number of consecutive symbols,
- Frequency-domain Resource Allocation (for example, information indicating a predetermined number of resource blocks that make up the CORESET (CORESET-freq-dom)),
- Mapping type (information indicating interleaved or non-interleaved) from a control channel element (CCE) in the CORESET to a resource element group (REG) (for example, CORESET-CCE-to-REG-mapping) -type),
- Information indicating the size (number of REGs in the REG bundle) of the group (REG bundle) containing a predetermined number of REGs (for example, CORESET-REG-bundle-size),
- Information (e.g., CORESET-shift-index) indicating the cyclic shift (CS, CS amount or CS index) for the interleaver of the REG bundle,
- Transmission configuration indicator (TCI) state for a PDCCH (also called QCL information (antenna port QCL) of the DMRS antenna port for PDCCH reception), and
- An indication of the presence or absence of a TCI field in DCI (e.g., DCI format 1_0 or DCI format 1_1) transmitted by a PDCCH in CORESET#p (e.g., TCI-PresentInDCI).

Note that "CORESET-ID#0" may indicate a CORESET (which may also be called initial CORESET, default CORESET, etc.) configured using the MIB.

A search area and a search method for PDCCH candidates are defined as a search space (SS). The UE may receive configuration information of search space (which may also be referred to as search space configuration) from the base station. The search space configuration may be notified by, for example, higher layer signaling (RRC signaling or the like).

The UE monitors a CORESET based on the search space configuration. The UE can determine the correspondence between the CORESET and the search space based on the CORESET-ID included in the search space configuration. One CORESET may be associated with one or more search spaces.

### (QCL/TCI)

In the NR, it is considered that the UE controls reception processing (e.g., demapping, demodulation, decoding, reception beam formation, etc.) and transmission processing (e.g., mapping, modulation, coding, precoding, transmission beam formation, etc.) of a channel (e.g., PDCCH, PDSCH, PUCCH, etc.) based on the information (QCL information) about the quasi colocation (QCL: Quasi-Co-Location) of the channel.

Here, QCL is an index indicating the statistical properties of the channel. For example, when one signal/channel has a QCL relationship with another signal/channel, between these different signals/channels, it may mean that it is possible to assume that they are the same at least in one of doppler shift, doppler spread, average delay, delay spread, spatial parameter (e.g., spatial Rx parameter) (i.e., QCL for at least one of these).

Note that the spatial Rx parameter may correspond to the reception beam of the UE (for example, reception analog beam), and the beam may be specified based on the spatial QCL. The QCL (or at least one element of the QCL) in the present disclosure may be read as sQCL (spatial QCL).

A plurality of types of QCL (QCL type) may be defined. For example, four QCL types A-D with different parameters (or parameter sets) that can be assumed to be the same may be provided, which parameters are shown below:
- QCL type A: doppler shift, doppler spread, average delay and delay spread,
- QCL Type B: doppler shift and doppler spread,
- QCL type C: average delay and doppler shift, and
- QCL type D: spatial Rx parameter.

The TCI-state may indicate (or may include) QCL information. The TCI state (and/or QCL information) may be, for example, information regarding QCL between a target channel (or a reference signal (RS) for the channel) and another signal (for example, another downlink reference signal (DL-RS)), and may include at least one of information regarding a DL-RS in QCL relationship (DL-RS related information) and information indicating the above QCL type (QCL type information).

The DL-RS related information may include at least one of information indicating a DL-RS in QCL relationship and information indicating a resource of the DL-RS. For example, when a plurality of reference signal set (RS set) is configured in the UE, the DL-RS related information may indicate at least one of the channel (or port for the channel), a DL-RS in QCL relationship, and a resource of the DL-RS among RSs included in the RS set.

Here, at least one of an RS and a DL-RS for the channel may be at least one of a synchronization signal (SS), a broadcast channel (PBCH: Physical Broadcast Channel), a synchronization signal block (SSB), a mobility reference signal (MRS: Mobility RS), a channel state information reference signal (CSI-RS), a demodulation reference signal (DMRS), a beam-specific signal, and the like, or a signal constituted by extension or change thereof (for example, a signal constituted by changing at least one of the density and the period).

The synchronization signal may be, for example, at least one of a primary synchronization signal (PSS), a secondary synchronization signal (SSS). The SSB may be a signal block including a synchronization signal and a broadcast channel, and may be called an SS/PBCH block or the like.

Information about the PDCCH (or DMRS antenna port associated with the PDCCH) and the QCL with a predetermined DL-RS may be referred to as the TCI state for the PDCCH.

The UE may determine the TCI state for a UE-specific PDCCH (CORESET) based on RRC signaling and MAC CE.

For example, in the UE, one or more (K) TCI states may be configured by higher layer signaling (ControlResourceSet information element) for each CORESET. Also, the UE may activate one or more TCI states for each CORESET using MAC CE. The MAC CE may be referred to as a TCI state indication for UE-specific PDCCH MAC CE. The UE may monitor the CORESET based on the active TCI state corresponding to the CORESET.

The TCI state may correspond to a beam. For example, the UE may assume that a PDCCH with a different TCI state is transmitted using a different beam.

Information about the PDSCH (or DMRS antenna port associated with the PDSCH) and the QCL with a predetermined DL-RS may be referred to as the TCI state for the PDSCH.

The UE may notify (configure) M (M ≥ 1) TCI states for PDSCH (QCL information for M PDSCHs) by higher layer signaling. Note that the number M of TCI states configured in the UE may be limited by at least one of the UE capability and the QCL type.

The DCI used for PDSCH scheduling may include a predetermined field (for example, a field for TCI, a TCI field, a TCI state field, etc.) indicating a TCI state (QCL information for PDSCH). The DCI may be used for PDSCH scheduling of one cell, and may be called, for example, DL DCI, DL assignment, DCI format 1_0, DCI format 1_1, or the like.

Also, when the DCI contains an x-bit (e.g., x = 3) TCI field, the base station may preliminarily configure, in the UE, up to 2^{x} (e.g., eight when x = 3) types of TCI states using higher layer signaling. A value of the TCI field in the DCI (TCI field value) may indicate one of the TCI states preliminarily configured by higher layer signaling.

When more than eight types of TCI states are configured in the UE, MAC CE may be used to activate (or specify) eight or less TCI states. The MAC CE may be referred to as a TCI state activation/deactivation for UE-specific PDSCH MAC CE. A value of the TCI field in the DCI may indicate one of the TCI states activated by MAC CE.

The UE may determine the QCL of the PDSCH (or DMRS port of PDSCH) based on the TCI state indicated by the TCI field value in DCI. For example, the UE, assuming that the DMRS port (or DMRS port group) of the PDSCH of the serving cell is QCL with respect to a DL-RS corresponding to the TCI state notified by DCI, may control the PDSCH reception processing (for example, decoding, demodulation, etc.).

### (Beam Management)

Incidentally, in Rel-15 NR, a method of beam management (BM) has been studied. In the beam management, beam selection is being considered based on an L1-RSRP reported by the UE. Changing (switching) the beam of a signal/channel is equivalent to changing the TCI state (QCL) of the signal/channel.

Note that the beam selected by the beam selection may be a transmission beam (Tx beam) or a reception beam (Rx beam). Further, the beam selected by the beam selection may be a UE beam or a base station beam.

The UE may include the L1-RSRP in the CSI and report it using an uplink control channel (PUCCH: Physical Uplink Control Channel) or an uplink shared channel (PUSCH: Physical Uplink Shared Channel).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), an L1-RSRP, and so on.

The measurement results (e.g., CSI) reported for beam management may be referred to as beam measurement, beam measurement result, beam measurement report, and the like.

The UE may use a resource for CSI measurement to measure a channel state and derive an L1-RSRP. The resource for CSI measurement may be, for example, at least one of an SS/PBCH block resource, a CSI-RS resource, and other reference signal resources. The configuration information of the CSI measurement report may be configured in the UE using higher layer signaling.

The configuration information of the CSI measurement report (CSI-MeasConfig or CSI-ResourceConfig) may include one or more non-zero power (NZP) CSI-RS resource sets (NZP-CSI-RS-ResourceSet) for CSI measurement, one or more zero power (ZP) CSI-RS resource sets (ZP-CSI-RS-ResourceSet) (or CSI-IM (Interference Management) resource set (CSI-IM-ResourceSet)), and one or more SS/PBCH block resource sets (CSI-SSB-ResourceSet).

The information of each resource set may include information about repetition in the resources in the resource set. Information about the repetition may indicate, for example, 'on' or 'off'. Note that 'on' may be expressed as 'enabled' or 'valid', and 'off' may be expressed as 'disabled' or 'invalid'.

For example, for a resource set for which repetition is configured to be 'on', the UE may assume that the resource in the resource set has been transmitted using the same downlink spatial domain transmission filter. In this case, the UE may assume that the resource in the resource set has been transmitted using the same beam (e.g., from the same base station using the same beam).

For a resource set for which repetition is configured to be 'off', the UE may perform control such that the UE should not assume (or may not assume) assume that the resource in the resource set has been transmitted using the same downlink spatial domain transmission filter. In this case, the UE may assume that the resource in the resource set is not transmitted using the same beam (transmitted using a different beam). That is, the UE may assume that the base station is performing beam sweeping for a resource set for which repetition is configured to be 'off'.

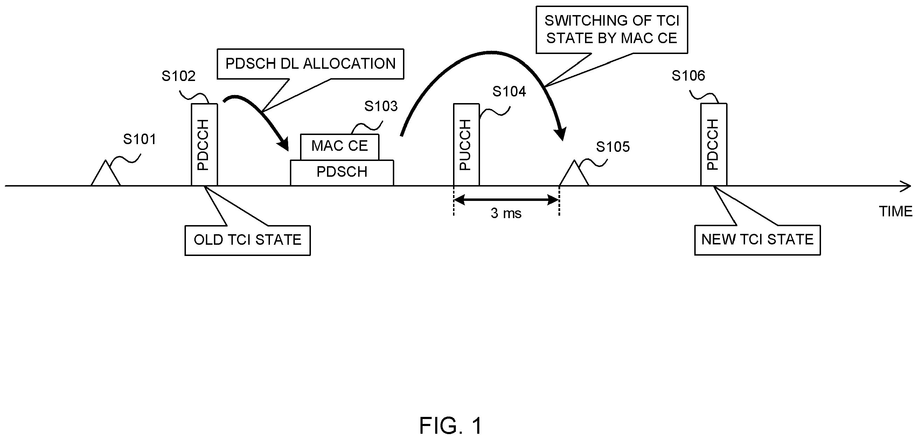

Fig. 1 is a diagram showing an example of beam management for PDCCH in Rel-15 NR. A NW (network, e.g., base station) determines to switch the TCI state for PDCCH of a UE (step S101). The NW transmits DCI for scheduling a PDSCH to the UE using a PDCCH according to an old (pre-switching) TCI state (step S102).

In addition, the base station transmits the PDSCH including the TCI state indication for UE-specific PDCCH MAC CE (step S103).

When detecting the DCI, the UE decodes the PDSCH and acquires the MAC CE. When receiving the MAC CE, the UE transmits a HARQ-ACK (Hybrid Automatic Repeat reQuest Acknowledgement) for the PDSCH provided with the MAC CE (step S104). The UE applies an activation command for the TCI state based on the above MAC CE three milliseconds after from the slot for transmitting the HARQ-ACK (step S105).

Then, the base station transmits a PDCCH according to a new (post-switching) TCI state, and the UE can receive and decode the PDCCH (step S106).

As described above, the control method for the TCI state for PDCCH studied so far for Rel-15 NR requires a relatively long time to change the TCI state. Also, for other channels (PDSCH, PUCCH, etc.), it takes a relatively long time to change the TCI state and communication overhead is required. Therefore, in cases where the TCI state needs to be changed frequently, the delay required for the change becomes a problem, and the communication throughput can be reduced.

Therefore, the present inventors have conceived a method of switching the TCI state or beam of a channel at high speed.

Hereinafter, embodiments according to the present disclosure will be described in detail with reference to the drawings. The radio communication method according to each of the embodiments may be applied independently, or may be applied in combination with others.

### (Radio Communication Method)

### <Low Latency Beam Selection Configuration>

In one embodiment, the UE may assume that the TCI state for PDCCH is not configured when low latency beam selection is configured by higher layer signaling.

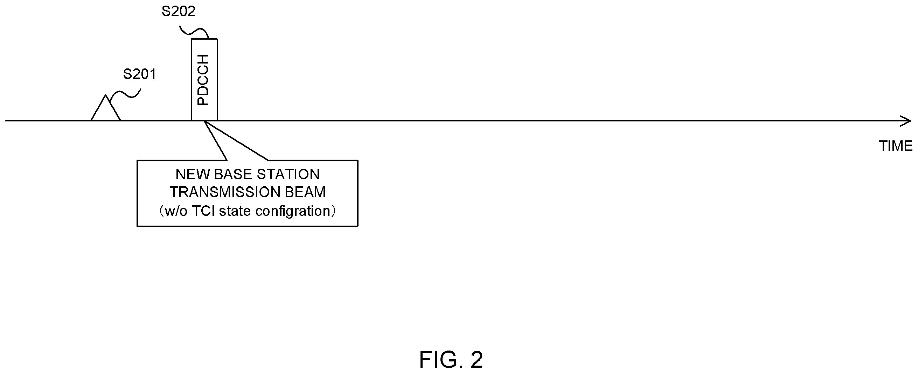

Fig. 2 is a diagram showing an example of low latency beam selection. The NW determines to switch the TCI state for PDCCH of a UE (step S201). After step S201, the NW transmits a PDCCH according to a new (post-switching) TCI state to the UE without transmitting a PDCCH (DCI) according to an old TCI state or transmitting a PDSCH (MAC CE) as shown in Fig. 1 (step S202).

Note that low latency beam selection may be called fast beam selection, beam selection w/o TCI state, beam selection type II, TCI state specification type 2, or the like.

On the other hand, the TCI state specification method using RRC+MAC CE described in Fig. 1 may be called high latency beam selection, slow beam selection, beam selection w TCI state, beam selection type I, TCI state specification type 1, Rel-15 beam selection, or the like.

The UE may assume to follow the high latency beam selection when the low latency beam selection is not configured. In this case, the UE can grasp the transmission beam of the base station as the TCI state is configured.

That is, the UE can switch between low latency beam selection and high latency beam selection by higher layer signaling.

### <PDCCH Reception Processing>

Even when the TCI state is not configured as shown in Fig. 2, the UE may decode the PDCCH by attempting blind decoding of the PDCCH, for example, for the assumed TCI state. The UE may assume that a particular signal/channel (e.g., at least one of the configured SS/PBCH block and CSI-RS) is QCL with respect to the DMRS of the PDCCH, and perform the PDCCH reception processing (demodulation, decoding, etc.).

Also, the UE with low latency beam selection configured may assume that the UE reception beam for PDCCH is the same as a UE reception beam corresponding to the latest beam measurement result reported. The UE with low latency beam selection configured may assume that the base station transmission beam for PDCCH is the same as a base station transmission beam corresponding to the latest beam measurement result the UE has reported. In other words, the UE with low latency beam selection configured may assume that the TCI state for PDCCH is the same as the TCI state corresponding to the latest beam measurement result reported (QCL with respect to a signal/channel used for measurement corresponding to the latest beam measurement result reported).

Based on such assumptions, the UE can monitor the PDCCH (CORESET) using a specific UE reception beam without being notified of the TCI state for PDCCH.

Note that, in the present disclosure, "low latency beam selection is configured" may be read to mean "low latency beam selection is configured and repetition in a resource in the resource set for CSI measurement is configured to be 'off' ", "low latency beam selection is configured and the base station applies transmission beam sweeping in a resource for CSI measurement", or the like.

Further, the CORESET in the present disclosure may be read as at least one of a search space, a search space set, a PDCCH candidate, and the like.

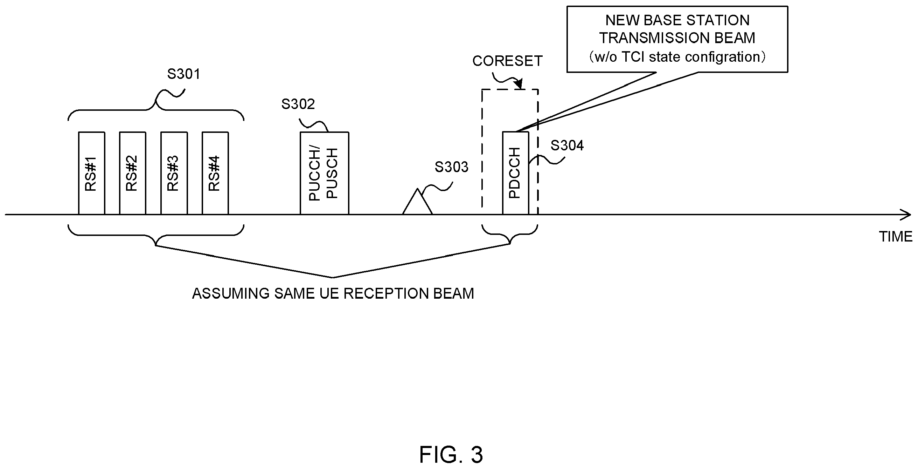

Fig. 3 is a diagram showing an example of beam management for PDCCH when low latency beam selection is configured. The UE assumes that low latency beam selection is configured and further as reference signal for CSI measurement, RS#1-#4 for which repetition is 'off' are configured.

The base station transmits RS#1-#4 to the UE (step S301). The base station may apply transmission beam sweeping to the transmission of the RS. The UE may assume the same UE reception beam for RS#1-#4 for which repetition is 'off' (the reception processing may be performed using the same UE reception beam).

The UE transmits a measurement report (for example, CSI) based on the measurement result of RS#1-#4 using a PUCCU or a PUSCH (step S302). The UE may transmit, for example, the measurement result of the best beam of RS#1-R4. The measurement report will be described later.

The base station may determine to switch the TCI state for PDCCH of the UE at an arbitrary timing (step S303). The base station may transmit the PDCCH transmitted by any CORESET after step S303 using the new base station transmission beam (TCI state) (step S304).

The UE may use the same UE reception beam as the UE reception beam (UE reception beam used in step S301) corresponding to the latest beam measurement result reported in step S302 for the reception of the CORESET in step S304.

### <Beam Measurement Report>

An example of the measurement report in step S302 will be described. The UE may report (transmit) a measurement result (for example, CSI) by using a PUCCH or PUSCH by performing at least one of a channel quality measurement and an interference measurement based on at least one of the resource for CSI measurement and the resource for interference measurement.

The resource for CSI measurement and the resource for interference measurement may be, for example, a resource of SS/PBCH block, a resource of CSI-RS, or the like. The base station may perform transmission or reception beam selection based on the result reported by the UE. Hereinafter, the CSI measurement and the interference measurement are collectively referred to as the CSI measurement.

The CSI measurement/report in the present disclosure may be read as at least one of measurement/report for beam management, beam measurement/report, radio link quality measurement/report, and the like.

In addition, the result of channel quality measurement may include, for example, L1-RSRP.

In addition, the result of interference measurement may include SINR (Signal to Interference plus Noise Ratio), SNR (Signal to Noise Ratio), RSRQ (Reference Signal Received Quality), and other indices related to interference (for example, any index other than L1-RSRP). Note that SINR, SNR, and RSRQ may be referred to as, for example, L1-SINR, L1-SNR, and L1-RSRQ, respectively.

When the UE reports at least one of the L1-RSRP, L1-RSRQ, L1-SINR, and result of channel quality measurement, the UE may report the largest value of a predetermined number (value of a predetermined number from the largest). When the UE reports at least one of the results of interference measurements, the UE may report the smallest number of a predetermined number (value of a predetermined number from the smallest). Note that when UCI includes a plurality of values, one value and the difference between the one value and another value may be included.

The UE may be notified of information regarding the predetermined number by using higher layer signaling, physical layer signaling, or a combination of these. The predetermined number may be, for example, 1, 2, 4, or the like. The predetermined number may be configured to be a different value between the report of the channel quality measurement and the report of the interference measurement.

The UE may report a beam index (beam ID), a CSI measurement resource ID (e.g., SSBRI, CRI), or a CSI measurement signal index (e.g., SSB index, CSI-RS ID) corresponding to at least one of the largest L1-RSRP, L1-RSRQ, L1-SINR and result of channel quality measurement of a predetermined number.

The UE may report a beam index (beam ID), a CSI measurement resource ID (e.g., SSBRI, CRI), or a CSI measurement signal index (e.g., SSB index, CSI-RS ID) corresponding to at least one of the smallest results of interference measurement of a predetermined number.

The PUCCH or PUSCH resource may correspond to the beam index, the CSI measurement resource ID, or the CSI measurement signal index. The UE may implicitly notify the base station of the beam index or the like by performing reporting using a specific PUCCH/PUSCH resource without explicitly reporting the information regarding the beam index or the like.

For example, the UE may configure X (e.g., eight) PUCCH/PUSCH resources corresponding to a CSI measurement beam/resource/ID by higher layer signaling. The UE may transmit a CSI report using x (e.g., two) resources corresponding to the beam/resource/ID of a report target among the X resources.

Note that the PUCCH/PUSCH resource configured for CSI reporting may correspond to at least one of time resource, frequency resource, code resource (e.g., cyclic shift, orthogonal cover code (OCC)), and the like.

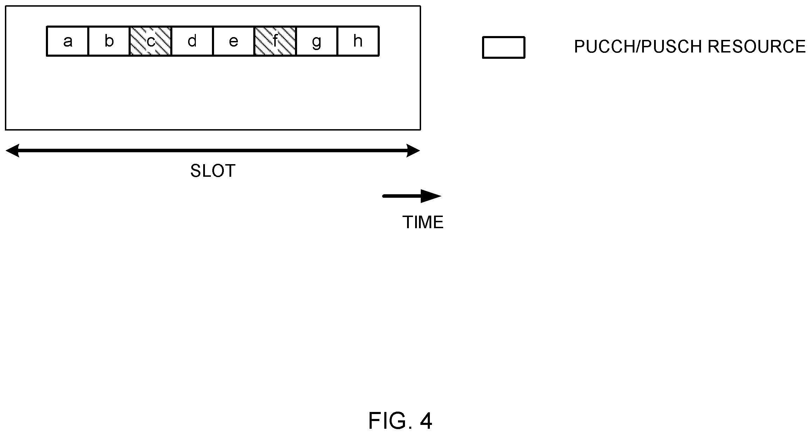

Fig. 4 is a diagram showing an example of a PUCCH or PUSCH resource for reporting CSI measurement results. In this example, the UE has eight PUCCH/PUSCH resources configured for reporting, corresponding to the resources for CSI measurement. For example, the resources may be resources for a scheduling request (SR) for PUCCH format 0.

The configured resources correspond to respective beams a to h. In Fig. 4, the UE performs transmission in the corresponding SR resources to report the results of the beams c and f.

Note that the above-mentioned "largest of the predetermined number" may be read as "the measurement result is equal to or greater than the threshold value", "the measurement result is equal to or greater than the threshold value, and is the largest of the predetermined number", and the like. Further the above-mentioned "smallest of the predetermined number" may be read as "the measurement result is less than the threshold value", "the measurement result is less than the threshold value, and is the largest of the predetermined number", and the like. Here, the threshold value may be configured by higher layer signaling or may be set by specifications.

When the UE reports more than one measurement result to the base station, how the base station determines the beam for the UE may depend on the implementation of the base station.

### <Channel to which control that does not configure the TCI state is applied>

The low latency beam selection related control of the present disclosure (e.g., control that does not configure the TCI state) may be applied only to the PDCCH. This is because the above-mentioned problem (latency) for beam selection is mainly related to the PDCCH and it is assumed that the beam selection of Rel-15 NR for other channels is functioning. In this case, the complexity of UE implementation can be suppressed.

Further, the control that does not configure the TCI state may also be applied to the PDSCH. In this case, the UE may assume that the PDCCH and the PDSCH are transmitted from the base station using the same transmission beam. By not configuring the TCI state in the PDSCH, it is not necessary to give a notification of the TCI state for the PDSCH using DCI, MAC CE, or the like, and therefore the communication overhead can be expected to be reduced.

Further, the control that does not configure the TCI state may also be applied to the PUCCH. In this case, the UE may assume that the transmission beam of the PDCCH of the base station and the reception beam of the PUCCH of the base station are the same beam.

Here, regarding the PUCCH, one corresponding to the TCI state may be expressed as a spatial relation. In Rel-15 NR, the PUCCH configuration information (PUCCH-Config information element) of the RRC can include the spatial relation information between a predetermined RS and the PUCCH. The predetermined RS is at least one of SSB, CSI-RS and a sounding reference signal (SRS).

When the spatial relation information about SSB or CSI-RS and PUCCH is configured, the UE may transmit the PUCCH using the same spatial domain filter as the spatial domain filter for receiving the SSB or CSI-RS. That is, in this case, the UE may assume that the UE reception beam of the SSB or CSI-RS and the UE transmission beam of the PUCCH are the same.

When the spatial relation information about the SRS and the PUCCH is configured, the UE may transmit the PUCCH using the same spatial domain filter as the spatial domain filter for transmitting the SRS. That is, in this case, the UE may assume that the UE transmission beam of the SRS and the UE transmission beam of the PUCCH are the same.

Note that the spatial domain filter for transmission of the base station, the downlink spatial domain transmission filter, and the transmission beam of the base station may be replaced with each other. The spatial domain filter for reception of the base station, the uplink spatial domain reception filter, and the reception beam of the base station may be replaced with each other.

Further, the spatial domain filter for transmission of the UE, the uplink spatial domain transmission filter, and the transmission beam of the UE may be replaced with each other. The spatial domain filter for reception of the UE, the downlink spatial domain reception filter, and the reception beam of the UE may be replaced with each other.

When more than one piece of spatial relation information regarding the PUCCH is configured, a PUCCH spatial relation activation/deactivation MAC CE is used for one PUCCH spatial relation is controlled to be active with respect to one PUCCH resource at a given time.

The MAC CE may include information such as a serving cell ID, a BWP ID, and a PUCCH resource ID to which application is performed.

The UE may apply the corresponding configuration of the spatial domain filter based on the MAC CE for PUCCH transmission 3 ms after from the slot transmitting the HARQ-ACK for the PDSCH provided with the MAC CE.

By not configuring the spatial relation in the PUCCH, it is not necessary to give a notification (activation) of the spatial relation for the PUCCH using the MAC CE or the like, and therefore the communication overhead can be expected to be reduced.

A specific example will be described below.

### [Control that does not configure the TCI state in the PDSCH]

The UE may assume that the PDCCH and the PDSCH are transmitted from the base station using the same transmission beam when the low latency beam selection is configured by higher layer signaling.

When the PDSCH is subjected to semi-static resource allocation (for example, in the case of semi-persistent scheduling (SPS) PDSCH), the UE may assume that the base station transmission beam of the PDSCH and the base station transmission beam of the most recent PDCCH (CORESET) are the same.

When the PDSCH is subjected to dynamic resource allocation, the UE may assume that the base station transmission beam of the PDSCH and the base station transmission beam of the PDCCH (CORESET) that schedules the PDSCH are the same.

The UE may assume that the PDCCH and the PDSCH are received using the same UE reception beam when the low latency beam selection is configured by higher layer signaling.

When the PDSCH is subjected to semi-static resource allocation, the UE may receive the PDSCH using the UE reception beam for the most recent PDCCH (CORESET).

When the PDSCH is subjected to dynamic resource allocation, the UE may receive the PDSCH using the UE reception beam for the PDCCH (CORESET) that schedules the PDSCH.

The UE may assume that the TCI field contained in the DCI is 0 bits when the low latency beam selection is configured. For example, the TCI field in DCI format 1_1 may be 0 bits when a higher layer parameter (tci-PresentInDCI) indicating that the DCI includes the TCI field is not enabled or a higher layer parameter indicating the low latency beam selection is enabled.

The UE, even when more than eight TCI states are configured by higher layer signaling, may assume that there is no notification of the TCI state activation/deactivation for UE-specific PDSCH MAC CE (MAC CE for beam selection of the PDSCH) when low latency beam selection is configured (it is not necessary to expect reception of the MAC CE).

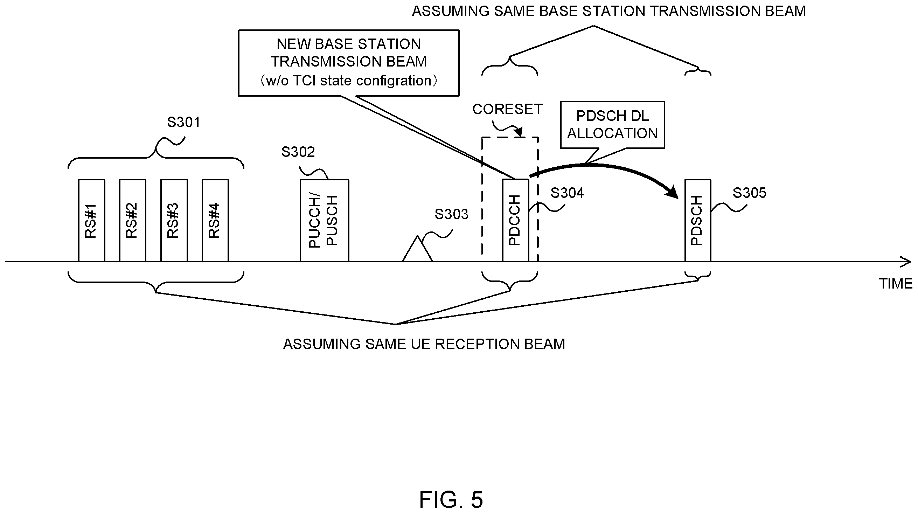

Fig. 5 is a diagram showing an example of beam management for PDSCH when low latency beam selection is configured. Since steps S301 to S304 may be the same as the example of Fig. 3, duplicate description will be omitted. In this example, it is assumed that the UE has detected the DCI that schedules the PDSCH in the PDCCH of step S304.

The UE performs PDSCH reception processing based on the DCI (step S305). The UE may assume that the base station transmission beam of the PDSCH in step S305 and the base station transmission beam of the PDCCH in step S304 are the same.

Further, the UE may assume that the UE reception beam of the PDSCH in step S305 and the UE reception beam of the PDCCH in step S304 are the same.

Moreover, when the TCI state is not configured in the PDCCH, the UE may assume that the UE reception beam of the PDSCH in step S305, the UE reception beam of the PDCCH in step S304, and the UE reception beam (UE reception beam used in step S301) corresponding to the latest beam measurement result reported in step S302 are the same.

### [Control that does not configure the TCI state in the PUCCH]

The UE may assume that base station uses the same beam (same transmission/reception beam) for transmission/reception of the PDCCH, the PDSCH, and the PUCCH when the low latency beam selection is configured by higher layer signaling.

When the PUCCH is subjected to semi-static resource allocation (for example, for P-CSI reporting, SP-CSI reporting), the UE may assume that the base station beam (reception beam) of the PUCCH and the base station beam (transmission beam) of the most recent PDCCH or PDSCH are the same.

When the PUCCH is based on dynamic scheduling (e.g., when the HARQ-ACK for the PDSCH scheduled by DL assignment is transmitted by the PUCCH), the UE may assume that the base station beam (reception beam) of the PUCCH and the base station beam (transmission beam) of at least one of the PDSCH corresponding to the PUCCH and the PDCCH that has scheduled the PDSCH are the same.

The UE may assume that the reception beam of the PDCCH and the transmission beam of the PUCCH are the same when the low latency beam selection is configured by higher layer signaling.

When the PUCCH is subjected to semi-static resource allocation, the UE may assume that the UE transmission beam of the PUCCH and the UE reception beam of the most recent PDCCH or PDSCH are the same.

When the PUCCH is based on dynamic scheduling, the UE may assume that the UE transmission beam of the PUCCH and the UE reception beam of at least one of the PDSCH corresponding to the PUCCH and the PDCCH that has scheduled the PDSCH are the same.

The UE may assume that there is no notification of the PUCCH spatial relation activation/deactivation MAC CE when the low latency beam selection is configured (it is not necessary to expect reception of the MAC CE).

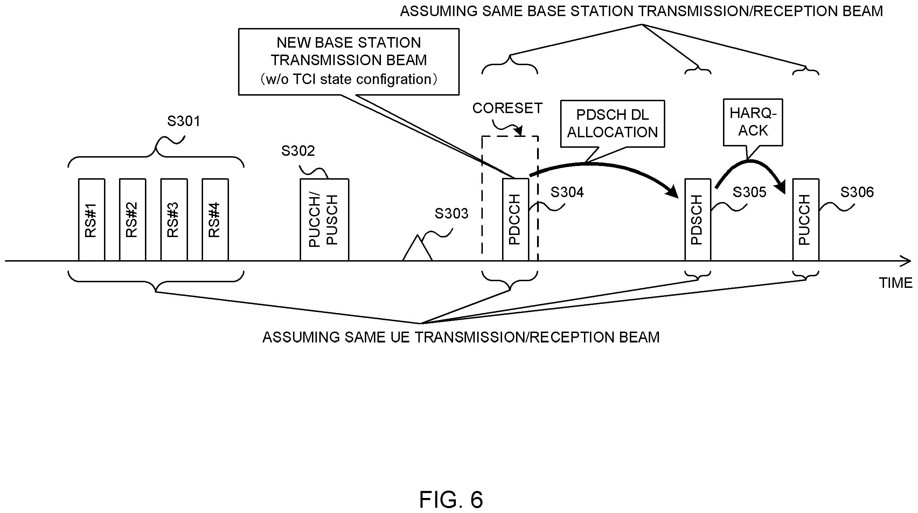

Fig. 6 is a diagram showing an example of beam management for PUCCH when low latency beam selection is configured. Since steps S301 to S305 may be the same as the example of Fig. 5, duplicate description will be omitted.

The UE transmits the HARQ-ACK for the PDSCH received in step S305 (step S306). The UE may assume that the base station reception beam of the PUCCH in step S306, the base station transmission beam of the PDSCH in step S305, and the base station transmission beam of the PDCCH in step S304 are the same.

Further, the UE may assume that the UE transmission beam of the PUCCH in step S306, the UE reception beam of the PDSCH in step S305, and the UE reception beam of the PDCCH in step S304 are the same.

Moreover, when the TCI state is not configured in the PDCCH, the UE may assume that the UE transmission beam of the PUCCH in step S306, the UE reception beam of the PDSCH in step S305, the UE reception beam of the PDCCH in step S304, and the UE reception beam (UE reception beam used in step S301) corresponding to the latest beam measurement result reported in step S302 are the same.

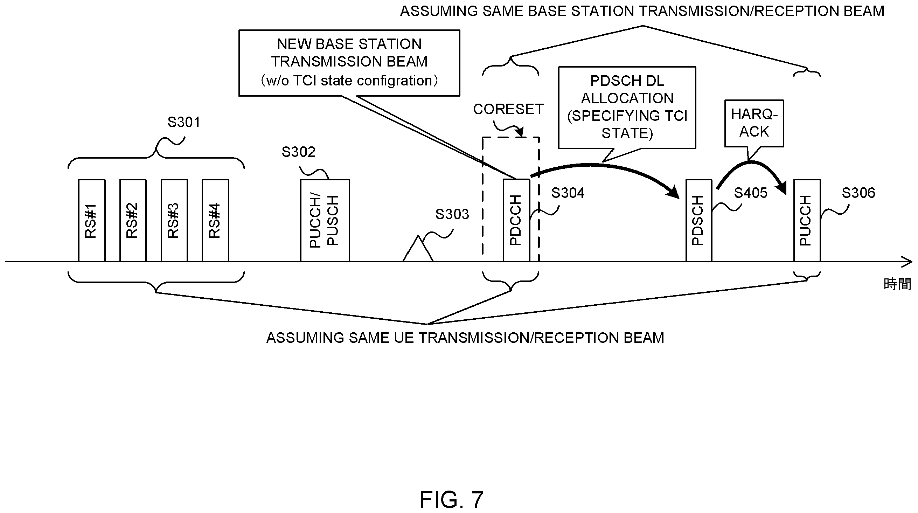

Fig. 7 is a diagram showing another example of beam management for PUCCH when low latency beam selection is configured. Since steps S301 to S303 and S306 may be the same as the example of Fig. 6, duplicate description will be omitted. In this example, it is assumed that the UE has detected the DCI that schedules the PDSCH in the PDCCH of step S304. Note that, unlike the example of Fig. 6, the DCI includes a field that specifies the TCI state for the PDSCH.

The UE performs the PDSCH reception processing based on the DCI (step S405). The UE may or may not assume that the base station transmission beam of the PDSCH in step S405 and the base station transmission beam of the PDCCH in step S304 are the same (Fig. 7 shows an example in which it is not assumed).

The UE may assume that the base station reception beam of the PUCCH in step S306 and the base station transmission beam of the PDCCH in step S304 are the same.

Further, the UE may assume that the UE transmission beam of the PUCCH in step S306 and the UE reception beam of the PDCCH in step S304 are the same.

Moreover, when the TCI state is not configured in the PDCCH, the UE may assume that the UE transmission beam of the PUCCH in step S306, the UE reception beam of the PDCCH in step S304, and the UE reception beam (UE reception beam used in step S301) corresponding to the latest beam measurement result reported in step S302 are the same.

According to one embodiment described above, the TCI state for the PDCCH can be configured more flexibly.

### <Variations>

### [Variation of the PDCCH reception processing]

Note that the "the latest beam measurement result reported" in the assumption described in the above PDCCH reception processing may be limited to a particular type of CSI report. The particular type of CSI report may, for example, be any of periodic CSI (P-CSI) report, aperiodic CSI (A-CSI) report, semi-permanent (semi-persistent) CSI (SP-CSI) report, or a combination thereof.

In this case, the UE's assumptions about the reception beam (TCI state) for PDCCH can be changed by controlling the base station to cause the UE to perform the particular type of CSI report.

Further, the "reception beam for PDCCH/base station transmission beam/TCI state" in the above assumption may be the "reception beam for PDCCH/base station transmission beam/TCI state at time T" and the "latest... reported" in the above assumption in this case may be read as "latest... reported at a time before the time T by greater than or equal to T_{offset}". The T_{offset} may be defined based on the time required for the UE or base station to switch beams (e.g., UE reception beam, base station transmission beam).

Note that the UE may be notified of information regarding T_{offset} by using higher layer signaling, physical layer signaling, or a combination of these.

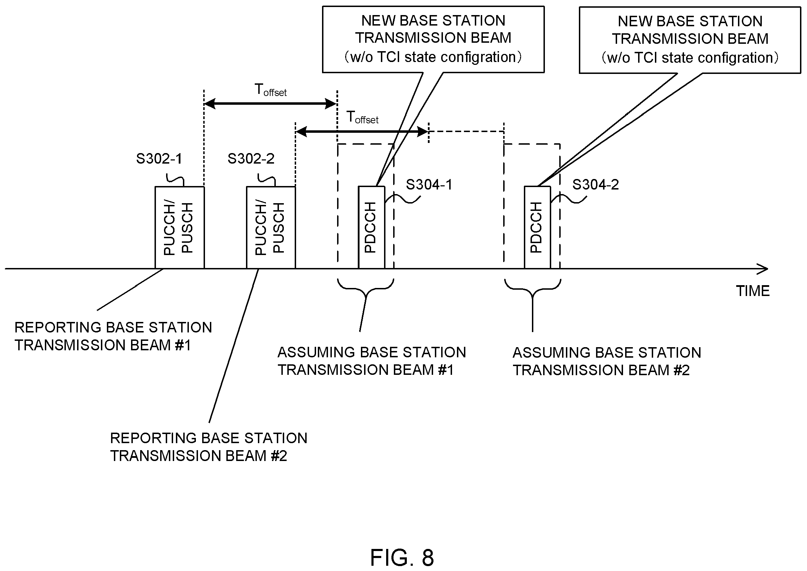

Fig. 8 is a diagram showing an example of an assumption of a base station transmission beam of a PDCCH based on T_{offset}. Steps S302-1 and S302-2 are the same as step S302 described above, but are different in that S302-1 is a report regarding base station transmission beam #1 and S302-2 is a report regarding base station transmission beam #2.

Steps S304-1 and S304-2 are the same as step S304 described above, but are different in that the UE assumes that the base station transmission beam #1 is applied to the PDCCH in S304-1 and the base station transmission beam #2 is applied to the PDCCH in S304-2.

This is because, at the time of step S304-1, the report of step S304-1 is the latest report transmitted at a time before by greater than or equal to T_{offset}, but the report of step S304-2 is transmitted at a time within T_{offset}.

Further, at the time of step S304-2, the report of step S304-2 is the latest report transmitted at a time before by greater than or equal to T_{offset}.

Note that the UE's assumption regarding the reception beam for the PDCCH may be changed within a certain CORESET duration.

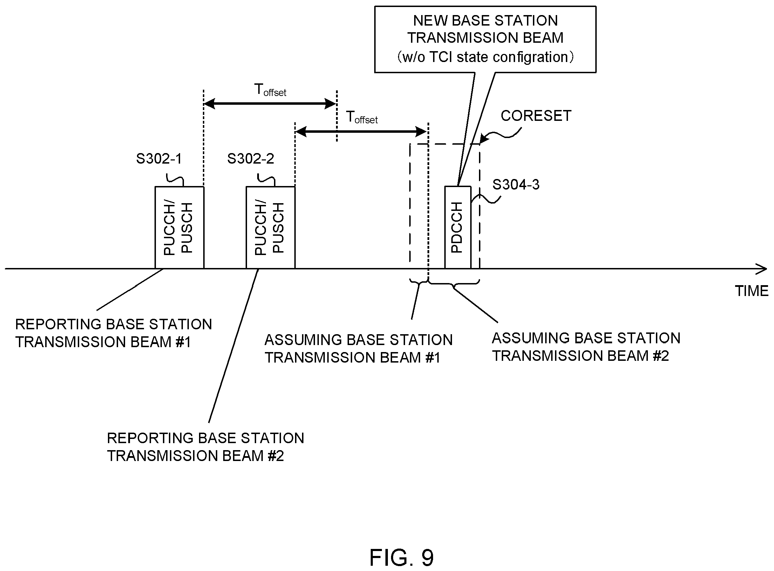

Fig. 9 is a diagram showing another example of an assumption of a base station transmission beam of a PDCCH based on T_{offset}. In this example, step S302-3 is shown in which the temporal position of CORESET is different from that in Fig. 8.

Further, it is different from step S304 described above in that the UE assumes that the base station transmission beam #1 is applied to the PDCCH halfway in the CORESET of step S304-3 and the base station transmission beam #2 is applied to the subsequent PDCCH.

This is because, at the time halfway in the CORESET, the report of step S304-1 is the latest report transmitted at a time before by greater than or equal to T_{offset}, but the report of step S304-2 is transmitted at a time within T_{offset}.

Further, after the time halfway in the CORESET, the report of step S304-2 is the latest report transmitted at a time before by greater than or equal to T_{offset}.

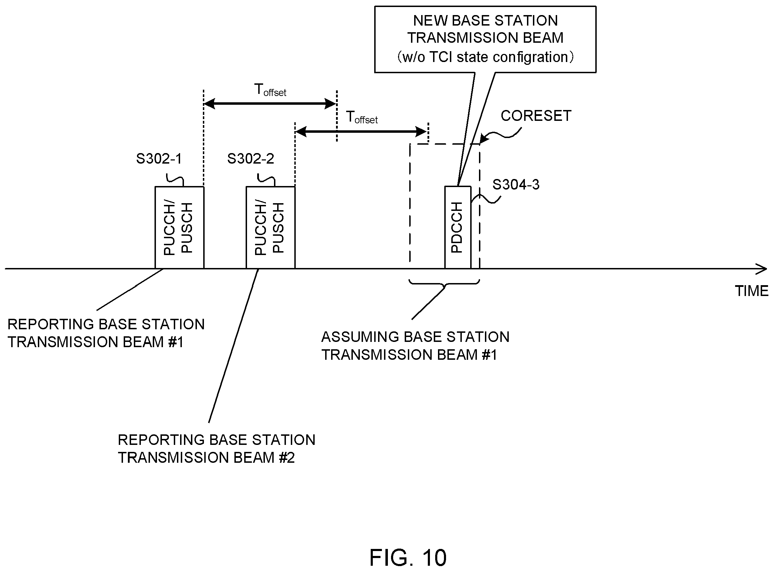

Fig. 10 is a diagram showing yet another example of an assumption of a base station transmission beam of a PDCCH based on T_{offset}. In this example, an example similar to that in Fig. 9 is shown.

Fig. 10 differs from Fig. 9 in that the UE does not change the assumption of the base station transmission beam halfway in the CORESET in step S304-3. The UE may assume that the base station transmission beam applied to the PDCCH in the CORESET is the base station transmission beam #1 corresponding to the report of step S304-1, which is the latest report transmitted at a time before by equal to or greater than T_{offset} from the time of the starting position of the CORESET (for example, starting symbol, starting slot, or the like).

In this way, the UE may assume that the base station transmission beam/UE reception beam of (PDCCH included in) the CORESET starting after T_{offset} from the report of the beam measurement result is the same as those in the assumption of the base station transmission beam/UE reception beam corresponding to the beam measurement result. In this case, since the switching of the base station transmission beam or the UE reception beam does not occur in the CORESET, it is possible to suppress that the transmission/reception beam switching time (time for which transmission and reception are disabled) occurs in the CORESET.

### [Other T_{offset}]

When the low latency beam selection is configured by higher layer signaling, the UE may assume that the base station transmission beam of the PDSCH at the time T is the same as the base station transmission beam of the (latest) PDCCH at a time before the time T by equal to or more than T_{offset2}.

When the low latency beam selection is configured by higher layer signaling, the UE may assume that the UE reception beam of the PDSCH at the time T is the same as the UE reception beam of the (latest) PDCCH at a time before the time T by equal to or more than T_{offset2}.

When the low latency beam selection is configured by higher layer signaling, the UE may assume that the base station reception beam of the PUCCH at the time T is the same as at least one of the base station reception beam of the (latest) PDSCH and the base station transmission beam of the (latest) PDCCH at a time before the time T by equal to or more than T_{offset3}.

When the low latency beam selection is configured by higher layer signaling, the UE may assume that the UE transmission beam of the PUCCH at the time T is the same as at least one of the UE reception beam of the (latest) PDSCH and the UE transmission beam of the (latest) PDCCH at a time before the time T by equal to or more than T_{offset3}.

The T_{offset2}, the T_{offset3}, and the like may be defined based on the time required for the UE or base station to switch beams (e.g., UE transmission beam, base station reception beam). Note that the UE may be notified of information regarding T_{offset2}, T_{offset3}, or the like by using higher layer signaling, physical layer signaling, or a combination of these.

Note that, in the present disclosure, "assume" may mean that the reception processing, the transmission processing, the measurement processing, and the like are performed assuming.

### (Radio Communication System)

Now, a configuration of a radio communication system according to one embodiment of the present disclosure will be described below. In this radio communication system, communication is performed using one or a combination of the radio communication methods according to the embodiments of the present disclosure.

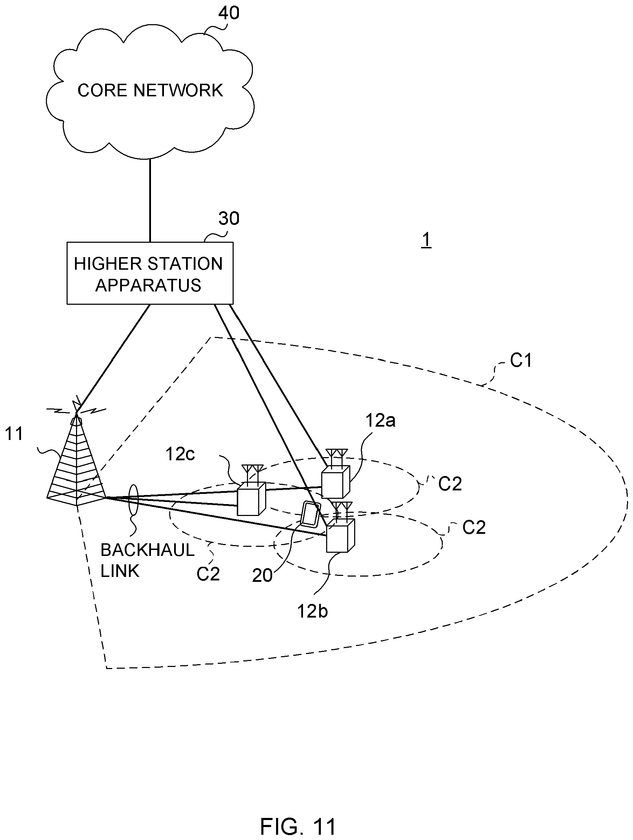

Fig. 11 is a diagram to show an example of a schematic structure of a radio communication system according to one embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one section.

Note that the radio communication system 1 may be referred to as "LTE (Long Term Evolution)", "LTE-A (LTE-Advanced)", "LTE-B (LTE-Beyond)", "SUPER 3G", "IMT-Advanced", "4G (4th generation mobile communication system)", "5G (5th generation mobile communication system)", "NR (New Radio)", "FRA (Future Radio Access)", "New-RAT (Radio Access Technology)", and so on, or may be seen as a system to implement these.

The radio communication system 1 includes a base station 11 that forms a macro cell C1 covering a relatively wide coverage, and base stations 12 (12a to 12c) that are placed within the macro cell C1 and that form small cells C2, which are narrower than the macro cell C1. Also, user equipment 20 is placed in the macro cell C1 and in each small cell C2. The arrangement, number and so on of cells and user equipment 20 are not limited to an aspect shown in the drawings.

The user equipment 20 can connect with both the base station 11 and the base stations 12. The user equipment 20 may use the macro cell C1 and the small cells C2 simultaneously using CA or DC. Furthermore, the user equipment 20 may apply CA or DC using a plurality of cells (CCs).

Between the user equipment 20 and the base station 11, communication can be carried out using a carrier of a relatively low frequency band (for example, 2 GHz) and a narrow bandwidth (referred to as an "existing carrier", a "legacy carrier" and so on). Meanwhile, between the user equipment 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

Moreover, the user equipment 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain and so on. For example, for a certain physical channel, when the subcarrier spacing differs and/or the numbers of OFDM symbols are different between the constituent OFDM symbols, this case may be described that they are different in numerology.

The base station 11 and the base station 12 (or between two base stations 12) may be connected by wire (for example, means in compliance with the common public radio interface (CPRI) such as optical fiber, an X2 interface, and so on) or wirelessly.

The base station 11 and the base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point" and so on. Also, the base stations 12 are base stations having local coverages, and may be referred to as "small base stations", "micro base stations", "pico base stations", "femto base stations", "HeNBs (Home eNodeBs)", "RRHs (Remote Radio Heads)", "transmission/reception points" and so on. Hereinafter the base stations 11 and 12 will be collectively referred to as "base stations 10", unless specified otherwise.

The user equipment 20 is equipment to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared CHannel)), which is used by each user equipment 20 on a shared basis, a broadcast channel (PBCH (Physical Broadcast CHannel)), downlink L1/L2 control channels and so on are used as downlink channels. User data, higher layer control information and SIBs (System Information Blocks) are transmitted in the PDSCH. Further, MIB (Master Information Block) is transmitted by PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on, is transmitted by the PDCCH.

Note that DCI that schedules receipt of DL data may also be referred to as "DL assignment", and DCI that schedules transmission of UL data may also be referred to as "UL grant".

The number of OFDM symbols to use for the PDCCH is communicated by the PCFICH. HARQ (Hybrid Automatic Repeat reQuest) delivery acknowledgement information (also referred to as, for example, "retransmission control information", "HARQ-ACKs", "ACK/NACKs" and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user equipment 20 on a shared basis, an uplink control channel (PUCCH (Physical Uplink Control Channel)), a random access channel (PRACH (Physical Random Access Channel)) and so on are used as uplink channels. User data, higher layer control information, and so on are communicated by the PUSCH. Also, in the PUCCH, downlink radio quality information (CQI (Channel Quality Indicator)), delivery acknowledgement information, scheduling requests (SRs) and so on are communicated. By means of the PRACH, random access preambles for establishing connections with cells are communicated.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, measurement reference signals (Sounding Reference Signals (SRSs)), demodulation reference signals (DMRSs), and so on are communicated as uplink reference signals. Note that, DMRSs may be referred to as "user equipment-specific reference signals (UE-specific Reference Signals)". Also, the reference signals to be communicated are by no means limited to these.

### (Base Station)

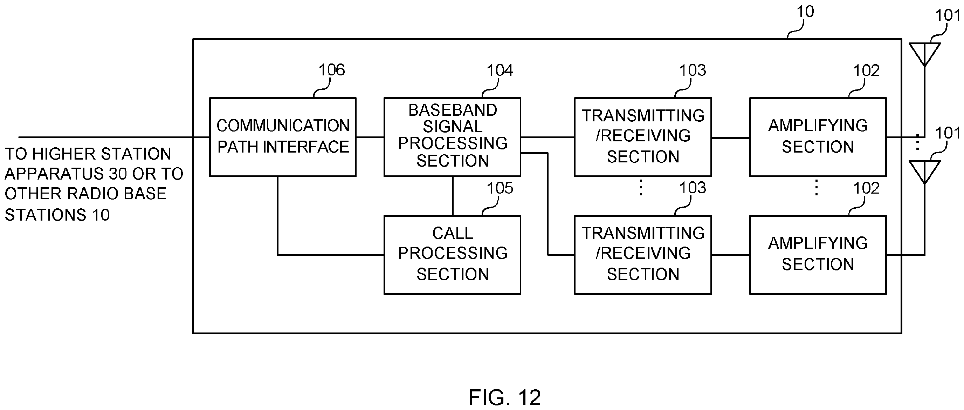

Fig. 12 is a diagram showing an example of an overall configuration of a base station according to one embodiment. A base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the base station 10 to the user equipment 20 on the downlink is input from the higher station apparatus 30 to the baseband signal processing section 104, via the communication path interface 106.

In the baseband signal processing section 104, the user data is subjected to transmission processing, including PDCP (Packet Data Convergence Protocol) layer processing, division and coupling of the user data, RLC (Radio Link Control) layer transmission processing such as RLC retransmission control, MAC (Medium Access Control) retransmission control (for example, an HARQ (Hybrid Automatic Repeat reQuest) transmission processing), scheduling, transport format selection, channel coding, inverse fast Fourier transform (IFFT) processing and precoding processing, and the result is forwarded to each transmitting/receiving section 103. Furthermore, downlink control signals are also subjected to transmission processing such as channel coding and an inverse fast Fourier transform, and forwarded to the transmitting/receiving sections 103.

Each of the transmitting/receiving sections 103 converts a baseband signal, which is pre-coded for each antenna and output from the baseband signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to fast Fourier transform (FFT) processing, inverse discrete Fourier transform (IDFT) processing, error correction decoding, MAC retransmission control receiving processing, and RLC layer and PDCP layer receiving processing, and forwarded to the higher station apparatus 30 via the communication path interface 106. The call processing section 105 performs call processing (such as setting up and releasing) of communication channels, manages the state of the base stations 10 and manages the radio resources.

The communication path interface 106 transmits and receives signals to and from the higher station apparatus 30 via a predetermined interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface, etc.).

Note that the transmitting/receiving section 103 may further include an analog beamforming section that performs analog beamforming. The analog beamforming section may be composed of an analog beamforming circuit (for example, a phase shifter, a phase shift circuit) or an analog beamforming device (for example, a phase shifter), which is described based on common understanding in the technical field according to the present invention. Further, the transmitting/receiving antenna 101 may be composed of an array antenna, for example.

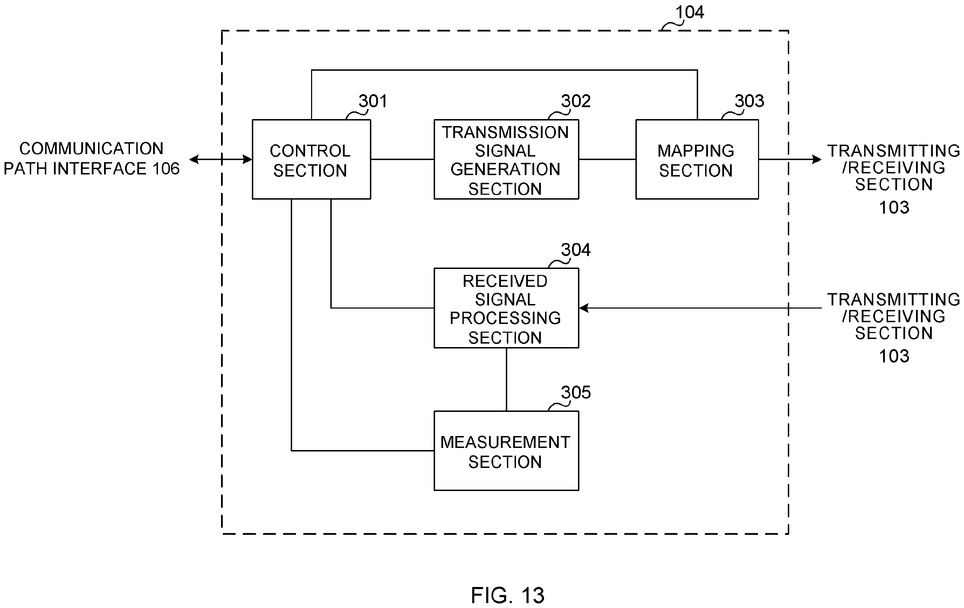

Fig. 13 is a diagram showing an example of a functional configuration of the base station according to one embodiment. Note that, although this example will primarily show functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processing in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals and so on, based on the results of deciding whether or not retransmission control is necessary for uplink data signals, and so on.

The control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The control section 301 may perform control to form a transmission beam and/or a reception beam using a digital BF (for example, precoding) in the baseband signal processing section 104 and/or an analog BF (for example, phase rotation) in the transmitting/receiving section 103. The control section 301 may perform control to form the beams based on downlink propagation path information, uplink propagation path information, and the like. These pieces of propagation path information may be acquired from the received signal processing section 304 and/or the measurement section 305.

The transmission signal generation section 302 generates downlink signals (downlink control signals, downlink data signals, downlink reference signals and so on) based on instructions from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on instructions from the control section 301. DL assignments and UL grants are both DCI, and follow the DCI format. Also, the downlink data signals are subjected to the coding processing, the modulation processing and so on, by using coding rates and modulation schemes that are determined based on, for example, channel state information (CSI) reported from each user equipment 20.

The mapping section 303 maps the downlink signals generated in the transmission signal generation section 302 to predetermined radio resources based on instructions from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processing (for example, demapping, demodulation, decoding and so on) of received signals that are input from the transmitting/receiving sections 103. Here, the received signals include, for example, uplink signals (uplink control signals, uplink data signals, uplink reference signals, etc.) that are transmitted from the user equipment 20. The received signal processing section 304 can be constituted by a signal processor, a signal processing circuit or signal processing apparatus that can be described based on general understanding of the technical field to which the present disclosure pertains.

The received signal processing section 304 outputs, to the control section 301, information decoded by the receiving processing. For example, when a PUCCH containing an HARQ-ACK is received, the HARQ-ACK is output to the control section 301. Also, the received signal processing section 304 outputs the received signals and/or the signals after the receiving processing to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), propagation path information (for example, CSI), and so on. The measurement results may be output to the control section 301.

Note that the transmitting/receiving section 103 may transmit the downlink control information (DCI) (DL assignment, etc.) for the schedule of the downlink shared channel (for example, PDSCH) using the PDCCH. The transmitting/receiving section 103 may transmit the configuration information of the low latency beam selection to the user equipment 20.

The transmitting/receiving section 103 may receive the measurement result of the reference signal (reference signal for CSI measurement, for example, SSB, CSI-RS, etc.) measured by applying the downlink spatial domain reception filter from the user equipment 20.

The control section 301 may control the user equipment 20 in which the low latency beam selection is configured by the higher layer signaling to use the same spatial domain filter for the transmission of the PDCCH and the transmission and reception of a specific channel.

The control section 301 may perform control to use the same downlink spatial domain transmission filter for PDCCH transmission and PDSCH transmission.

The control section 301 may perform control to use the same spatial domain transmission filter for PDCCH transmission and PUCCH reception.

Further, the control section 301 may control the user equipment 20 in which the low latency beam selection is configured by higher layer signaling to transmit the PDCCH by using the same downlink spatial domain transmission filter as the downlink spatial domain transmission filter corresponding to the aforementioned received latest measurement result (CSI measurement result or the like).

The control section 301 may control the transmission of the PDSCH by using the same downlink spatial domain transmission filter as the downlink spatial domain transmission filter used for the transmission of the PDCCH.

The control section 301 may control the reception of the PUCCH by using the same uplink spatial domain reception filter as the downlink spatial domain transmission filter used for the transmission of the PDCCH.

### (User Equipment)

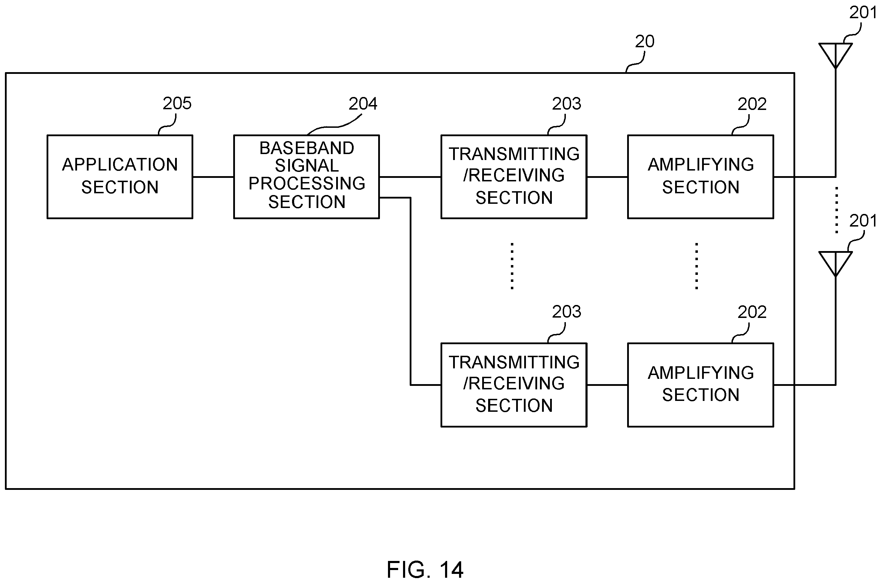

Fig. 14 is a diagram showing an example of an overall configuration of the user equipment according to one embodiment. The user equipment 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into baseband signal, and outputs the baseband signal to the baseband signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that the transmitting/receiving section 203 may be structured as a transmitting/receiving section in one entity, or may be constituted by a transmitting section and a receiving section.

The baseband signal processing section 204 performs receiving processing for the baseband signal that is input, including FFT processing, error correction decoding, retransmission control receiving processing and so on. Downlink user data is forwarded to the application section 205. The application section 205 performs processing related to higher layers above the physical layer and the MAC layer and so on. Also, in the downlink data, the broadcast information may be also forwarded to the application section 205.

Meanwhile, uplink user data is input from the application section 205 to the baseband signal processing section 204. The baseband signal processing section 204 performs retransmission control transmission processing (for example, HARQ transmission processing), channel coding, precoding, discrete Fourier transform (DFT) processing, IFFT processing and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beamforming section may be composed of an analog beamforming circuit (for example, a phase shifter, a phase shift circuit) or an analog beamforming device (for example, a phase shifter), which is described based on common understanding in the technical field according to the present invention. Further, the transmitting/receiving antenna 201 may be composed of an array antenna, for example.

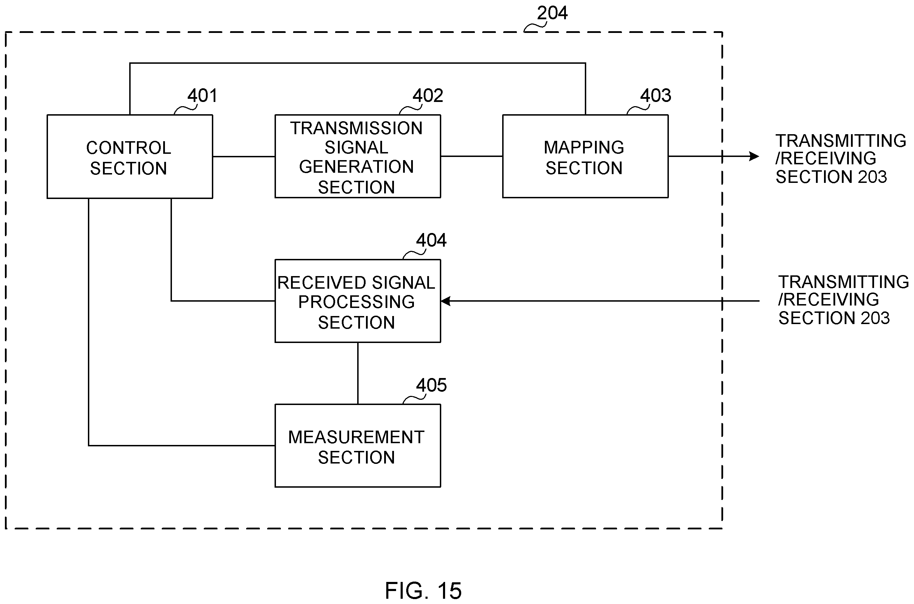

Fig. 15 is a diagram showing an example of a functional structure of the user equipment according to one embodiment. Note that, although this example will primarily show functional blocks that pertain to characteristic parts of the present embodiment, it may be assumed that the user equipment 20 has other functional blocks that are necessary for radio communication as well.

The baseband signal processing section 204 provided in the user equipment 20 at least has a control section 401, a transmission signal generation section 402, a mapping section 403, a received signal processing section 404 and a measurement section 405. Note that these configurations may be included in the user equipment 20, and some or all of the configurations need not be included in the baseband signal processing section 204.

The control section 401 controls the whole of the user equipment 20. The control section 401 can be constituted by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processing in the received signal processing section 404, the measurements of signals in the measurement section 405 and so on.

The control section 401 acquires the downlink control signals and downlink data signals transmitted from the base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may perform control to form a transmission beam and/or a reception beam using a digital BF (for example, precoding) in the baseband signal processing section 204 and/or an analog BF (for example, phase rotation) in the transmitting/receiving section 203. The control section 401 may perform control to form the beams based on downlink propagation path information, uplink propagation path information and so on. These pieces of propagation path information may be acquired from the received signal processing section 404 and/or the measurement section 405.

Further, when the control section 401 acquires various information reported from the base station 10 from the received signal processing section 404, the control section 401 may update the parameter used for control based on the information.

The transmission signal generation section 402 generates uplink signals (uplink control signals, uplink data signals, uplink reference signals, etc.) based on instructions from the control section 401, and outputs these signals to the mapping section 403. The transmission signal generation section 402 can be constituted by a signal generator, a signal generating circuit or signal generation apparatus that can be described based on general understanding of the technical field to which the present disclosure pertains.

For example, the transmission signal generation section 402 generates uplink control signals such as delivery acknowledgement information, channel state information (CSI) and so on, based on instructions from the control section 401. Also, the transmission signal generation section 402 generates uplink data signals based on instructions from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processing (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processing to the control section 401. The received signal processing section 404 outputs, for example, broadcast information, system information, RRC signaling, DCI, and so on, to the control section 401. Also, the received signal processing section 404 outputs the received signals and/or the signals after the receiving processing to the measurement section 405.

The measurement section 405 conducts measurements with respect to the received signals. For example, the measurement section 405 may perform same frequency measurement and/or different frequency measurement for one or both of the first carrier and the second carrier. When the serving cell is included in the first carrier, the measurement section 405 may perform the different frequency measurement in the second carrier based on a measurement instruction acquired from the received signal processing section 404. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

Note that the transmitting/receiving section 203 may receive a PDCCH containing downlink control information (DCI) (DL assignment, etc.) for scheduling a downlink shared channel (e.g., PDSCH). The transmitting/receiving section 203 may receive the configuration information of the low latency beam selection from the base station 10.

The transmitting/receiving section 203 may transmit the measurement result of the reference signal (reference signal for CSI measurement, for example, SSB, CSI-RS, etc.) measured by applying the downlink spatial domain reception filter to the base station 10.

The control section 401 may assume that, when the low latency beam selection is configured by higher layer signaling, the same spatial domain filter is used for the transmission of the PDCCH at the base station 10 and the transmission and reception (at least one of transmission and reception) of a specific channel at the base station 10.

The control section 401 may assume that the same downlink spatial domain transmission filter is used for the transmission of the PDCCH at the base station 10 and the transmission of the PDSCH at the base station 10.

The control section 401 may assume that the downlink spatial domain transmission filter used for the transmission of the PDCCH at base station 10 and the uplink spatial domain reception filter used for the reception of the PUCCH at base station 10 are the same.

Further, the control section 401 may assume that, when the low latency beam selection is configured by higher layer signaling, the downlink spatial domain reception filter of the user equipment 20 used for the reception of the PDCCH is the same as the downlink spatial domain reception filter of the user equipment 20 corresponding to the aforementioned transmitted latest measurement result (e.g., CSI measurement result).

The control section 401 may assume that the downlink spatial domain reception filter of the user equipment 20 used for reception of the PDSCH is the same as the downlink spatial domain reception filter of the user equipment 20 used for reception of the PDCCH.

The control section 401 may assume that the uplink spatial domain transmission filter of the user equipment 20 used for reception of the PUCCH is the same as the downlink spatial domain reception filter of the user equipment 20 used for reception of the PDCCH.

### (Hardware Structure)

Note that the block diagrams that have been used to describe the above embodiments show blocks in functional sections. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

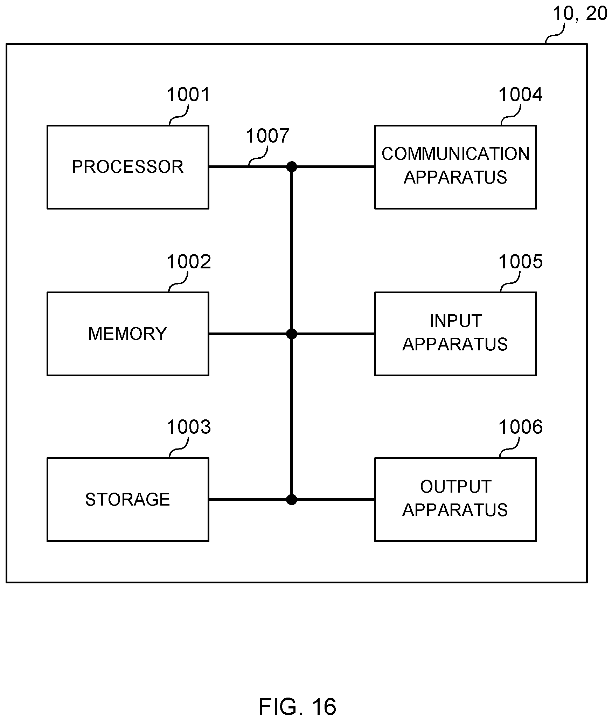

For example, the base station, the user equipment, and so on according to one embodiment of the present disclosure may function as a computer that executes the processing of the radio communication method of the present disclosure. Fig. 16 is a diagram showing an example of a hardware structure of the base station and the user equipment according to one embodiment. Physically, the above-described base station 10 and user equipment 20 may be formed as a computer apparatus that includes a processor 1001, a memory 1002, a storage 1003, a communication apparatus 1004, an input apparatus 1005, an output apparatus 1006 and a bus 1007.

Note that, in the following description, the word "apparatus" may be replaced by "circuit", "device", "section" and so on. The hardware structure of the base station 10 and the user equipment 20 may be designed to include one or more of each apparatus shown in the drawings, or may be designed not to include some apparatuses.

For example, although only one processor 1001 is shown, a plurality of processors may be provided. Furthermore, processing may be implemented with one processor, or processing may be implemented in sequence, or in different manners, on two or more processors. Note that the processor 1001 may be implemented with one or more chips.

Each function of the base station 10 and the user equipment 20 is implemented by reading predetermined software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, an operation apparatus, a register and so on. For example, the above-described baseband signal processing section 104 (204), call processing section 105 and so on may be implemented by the processor 1001.

Furthermore, the processor 1001 reads programs (program codes), software modules, or data, from at least one of the storage 1003 and the communication apparatus 1004, into the memory 1002, and executes various processing according to these. As for the programs, programs to allow computers to execute at least part of the operations described in the above-described embodiments may be used. For example, the control section 401 of the user equipment 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register", a "cache", a "main memory (main storage device)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on) . The output apparatus 1006 is an output device for allowing output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user equipment 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as an RS, and may be referred to as a pilot, a pilot signal, and so on, depending on which standard applies. Furthermore, a "component carrier (CC)" may be referred to as a "cell", a "frequency carrier", a "carrier frequency" and so on.

A radio frame may be comprised of one or more periods (frames) in the time domain. Each of one or a plurality of periods (frames) constituting a radio frame may be referred to as a subframe. Furthermore, a subframe may be comprised of one or a plurality of slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain and so on.

A slot may be comprised of one or more symbols in the time domain (OFDM (Orthogonal Frequency Division Multiplexing) symbols, SC-FDMA (Single Carrier Frequency Division Multiple Access) symbols, and so on) . Also, a slot may be a time unit based on numerology.

A slot may include a plurality of minislots. Each minislot may be comprised of one or more symbols in the time domain. Also, a minislot may be referred to as a "subslot". Each minislot may be comprised of fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as "PDSCH (PUSCH) mapping type B".

A radio frame, a subframe, a slot, a minislot and a symbol all represent the time unit in signal communication. A radio frame, a subframe, a slot, a minislot and a symbol may be each called by other applicable names. Note that time units such as a frame, a subframe, a slot, a minislot, and a symbol in the present disclosure may be replaced with each other.

For example, one subframe may be referred to as a "transmission time interval (TTI)", or a plurality of consecutive subframes may be referred to as a "TTI", or one slot or one minislot may be referred to as a "TTI". That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user equipment) to allocate to each user equipment in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one minislot is referred to as a "TTI", one or more TTIs (that is, one or multiple slots or one or more minislots) may be the minimum time unit of scheduling. Also, the number of slots (the number of minislots) to constitute this minimum time unit of scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "minislot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe or one TTI in length. One TTI, one subframe, and the like each may be comprised of one or more resource blocks.

Note that one or more RBs may be referred to as a "physical resource block (PRB (Physical RB))", a "subcarrier group (SCG)", a "resource element group (REG)", a "PRB pair", an "RB pair" and so on.

Furthermore, a resource block may be comprised of one or more resource elements (REs). For example, one RE may be a radio resource field of one subcarrier and one symbol.

The bandwidth part (BWP) (which may be called partial bandwidth etc.) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a predetermined signal/channel outside the active BWP. Note that "cell", "carrier", and the like in the present disclosure may be read as "BWP".

Note that the structures of radio frames, subframes, slots, minislots, symbols and so on described above are merely examples. For example, configurations pertaining to the number of subframes included in a radio frame, the number of slots included in a subframe or a radio frame, the number of mini-slots included in a slot, the number of symbols and RBs included in a slot or a minislot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to predetermined values, or may be represented using other applicable information. For example, a radio resource may be specified by a predetermined index.

The names used for parameters and so on in the present disclosure are in no respect limiting. In addition, an equation and so on using these parameters may differ from those explicitly disclosed in the present disclosure. Since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)", "L1 control information (L1 control signal)" and so on. Also, RRC signaling may be referred to as RRC messages, and can be, for example, an RRC connection setup message, RRC connection reconfiguration message, and so on. Also, MAC signaling may be reported using, for example, MAC control elements (MAC CEs (Control Elements)) .

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "precoding", "precoder", "weight (precoding weight)", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)", "user equipment", "user equipment (UE)", "terminal", etc. may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes a device that does not necessarily move during a communication operation.

Furthermore, the base stations in the present disclosure may be read as the user equipment. For example, each aspect/embodiment of the present disclosure may be applied to a structure in which communication between the base station and the user equipment is replaced by communication among a plurality of user equipment (which may be referred to as, for example, D2D (Device-to-Device), V2X (Vehicle-to-Everything) and so on) . In this case, the user equipment 20 may have the functions of the base station 10 described above. In addition, the wording such as "up" and "down" may be replaced with the wording corresponding to the terminal-to-terminal communication (for example, "side"). For example, an uplink channel and a downlink channel may be interpreted as a side channel.

Likewise, the user equipment in the present disclosure may be interpreted as the base station. In this case, the base station 10 may have the functions of the user equipment 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments shown in the present disclosure may be used individually or in combinations, which may be switched depending on the mode of implementation. The order of processing, sequences, flowcharts and so on that have been used to describe the aspects/embodiments in the present disclosure may be re-ordered as long as inconsistencies do not arise. For example, although various methods have been shown in the present disclosure with various components of steps using exemplary orders, the specific orders that are shown herein are by no means limiting.

The aspects/embodiments shown in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next generation systems that are enhanced based on these. Further, a plurality of systems may be combined and applied (for example, a combination of LTE or LTE-A and 5G) .

The phrase "based on" as used in the present disclosure does not mean "based only on", unless otherwise specified. In other words, the phrase "based on" means both "based only on" and "based at least on".

Reference to elements with designations such as "first", "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as "determining" judging, calculating, computing, processing, deriving, investigating, looking up (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering" and so on.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some nonlimiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other". Note that the term may mean that "A and B are different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive disjunction.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

## Claims

1. A user terminal comprising:
a transmitting section configured to transmit a measurement result of a reference signal measured by applying a downlink spatial domain reception filter; and
a control section configured to assume that a downlink spatial domain reception filter used for reception of a PDCCH (Physical Downlink Control Channel) is same as a downlink spatial domain reception filter corresponding to the transmitted latest measurement result when low latency beam selection is configured by higher layer signaling.

2. The user terminal according to claim 1, wherein the control section assumes that a downlink spatial domain reception filter used for reception of a PDSCH (Physical Downlink Shared Channel) is same as the downlink spatial domain reception filter used for reception of the PDCCH.

3. The user terminal according to claim 1 or 2, wherein the control section assumes that an uplink spatial domain transmission filter used for transmission of a PUCCH (Physical Uplink Control Channel) is same as the downlink spatial domain reception filter used for the PDCCH.

4. A base station comprising:
a receiving section configured to receive a measurement result of a reference signal measured by applying a downlink spatial domain reception filter; and
a control section configured to transmit a PDCCH (Physical Downlink Control Channel) by using a same downlink spatial domain transmission filter as a downlink spatial domain transmission filter corresponding to the received latest measurement result for a user terminal in which low latency beam selection is configured by higher layer signaling.

5. The base station according to claim 4, wherein the control section performs control to transmit a PDSCH (Physical Downlink Shared Channel) by using a same downlink spatial domain transmission filter as the downlink spatial domain transmission filter used for transmission of the PDCCH.

6. The base station according to claim 4 or 5, wherein the control section performs control to receive a PUCCH (Physical Uplink Control Channel) by using a same uplink spatial domain reception filter as the downlink spatial domain transmission filter used for transmission of the PDCCH.
